# FASCICULE DE BREVET EUROPEEN

(11) **EP 3 328 920 B1**
(45) Date de publication et mention de la délivrance du brevet: **06.11.2019**
(21) Numéro de dépôt: 16750662.5
(22) Date de dépôt: 26.07.2016
(51) Int. Cl.: C08J 3/215, B01F 5/02, B29B 7/76, C08C 1/15, B01F 5/00, B29B 7/32, C08J 3/22, C08K 3/04, C08L 21/02

(54) **PROCEDE ET DISPOSITIF POUR LA PREPARATION DE MELANGE CAOUTCHOUTEUX EN PHASE LIQUIDE**
VERFAHREN UND VORRICHTUNG ZUR HERSTELLUNG EINER KAUTSCHUKMISCHUNG IN EINER FLÜSSIGEN PHASE
METHOD AND DEVICE FOR PRODUCING A RUBBER MIXTURE IN A LIQUID PHASE

(30) Priorité: 31.07.2015 FR 1557362; 18.12.2015 FR 1562793
(43) Date de publication de la demande: 06.06.2018
(73) Titulaire: Compagnie Générale des Etablissements Michelin, 63000 Clermont-Ferrand (FR)
(72) Inventeur: PIALOT, Frédéric, 63040 Clermont-Ferrand Cedex 9 (FR); SURLEAU, Fabrice, 63040 Clermont-Ferrand Cedex 9 (FR); NEBOUT, Stéphane, 63040 Clermont-Ferrand Cedex 9 (FR)
(74) Mandataire: Dequire, Philippe Jean-Marie Denis
(86) Numéro de dépôt international: PCT/EP2016/067802
(87) Numéro de publication internationale: WO 2017/021219

(56) Documents cités:
- US-A1- 2012 172 492
- US-B1- 6 372 822

## Description

### Domaine de l'invention

L'invention concerne le domaine de la préparation de mélanges caoutchouteux, en particulier la préparation d'un mélange-maître d'élastomère diénique et de charge.

### État de la technique

On entend par « mélange-maître » (couramment désigné par son nom anglais « masterbatch ») un composite à base d'élastomère dans lequel a été introduite une charge organique ou inorganique et éventuellement d'autres additifs.

Les mélanges-maîtres sont ensuite utilisés pour la fabrication de compositions de caoutchoucs diéniques renforcées, destinées par exemple à la fabrication de pneumatiques ou de produits semi-finis pour pneumatiques, ces produits semi-finis étant par exemple des produits profilés comme des bandes de roulement ou des nappes de renforcement pour ces pneumatiques.

Pour obtenir les propriétés de renforcement optimales conférées par une charge dans une composition de caoutchouc, on sait qu'il convient d'une manière générale que cette charge soit présente dans la matrice élastomère sous une forme finale qui soit à la fois la plus finement divisée possible et répartie de la façon la plus homogène possible. Or, de telles conditions ne peuvent être réalisées que dans la mesure où cette charge présente une très bonne aptitude, d'une part à s'incorporer dans la matrice lors du mélange avec l'élastomère et à se désagglomérer, d'autre part à se disperser de façon homogène dans cette matrice.

De manière connue, le noir de carbone présente de telles aptitudes, ce qui n'est en général pas le cas des charges inorganiques, en particulier des silices. En effet, pour des raisons d'affinités réciproques, ces particules de charge inorganique ont une fâcheuse tendance, dans la matrice élastomère, à s'agglomérer entre elles. Ces interactions ont pour conséquence néfaste de limiter la dispersion de la charge et donc les propriétés de renforcement à un niveau sensiblement inférieur à celui qu'il serait théoriquement possible d'atteindre si toutes les liaisons (charge inorganique/élastomère) susceptibles d'être créées pendant l'opération de mélangeage, étaient effectivement obtenues ; ces interactions tendent d'autre part à augmenter la consistance à l'état cru des compositions caoutchouteuses et donc à rendre leur mise en œuvre ("processability") plus difficile qu'en présence de noir de carbone.

Le document US 6,048,923 décrit un procédé de préparation en continu d'un mélange-maître caoutchouteux chargé consistant à mettre en contact dans une zone de mélangeage un premier écoulement en phase liquide et un deuxième écoulement en phase liquide, le premier écoulement étant une émulsion d'élastomère, le deuxième écoulement étant une suspension aqueuse de particules de charge, dans lequel le deuxième écoulement est introduit sous très forte pression dans la zone de mélangeage pour former un courant suffisamment énergétique pour entraîner le premier écoulement et sensiblement complètement coaguler l'élastomère avec les particules de charge et dans lequel les charges utilisées sont des particules de noir de carbone. Le document US 6,372,822 divulgue un procédé pour préparer un mélange-maître caoutchouteux comprenant la mise en contact d'un fluide comprenant une charge avec un fluide comprenant un élastomère, la charge étant injectée dans le mélangeur à une pression supérieure à 20 bars.

### Description brève de l'invention

La demanderesse a découvert une méthode simplifiée d'obtention d'un mélange-maître.

Le procédé selon l'un des objets de l'invention consiste comme indiqué dans le document ci-dessus à mettre en contact dans une zone de mélangeage un premier écoulement en phase liquide et un deuxième écoulement en phase liquide, le premier écoulement étant une émulsion d'élastomère, le deuxième écoulement étant une suspension aqueuse de particules de charge. Ce procédé est caractérisé en ce que l'un des deux écoulements débouche au sein de l'autre écoulement et en ce que les deux écoulements sont acheminés à basse pression avant leur mise en contact.

De façon très surprenante, le fait de faire déboucher l'un des écoulements dans le deuxième et de les acheminer à basse pression permet d'obtenir en aval de la zone de mise en contact une excellente dispersion des particules de charge dans l'émulsion d'élastomère.

Par basse pression, on entend des pressions d'acheminement des premier et deuxième écoulements dans la zone en amont de la zone de mélangeage inférieures à 2 bars et de préférence inférieures à 1,5 bar. La perte de charge à l'intérieur du dispositif est ainsi inférieure à 1 bar.

Cela simplifie fortement les dispositifs d'acheminement des deux écoulements.

De préférence, en amont de la zone de mélangeage, le premier écoulement ayant une première section d'écoulement, le deuxième écoulement a une deuxième section d'écoulement supérieure à la première selon un rapport compris entre 5 et 8.

Alternativement ou de façon concomitante, de préférence, en amont de la zone de mélangeage, le premier écoulement ayant un premier débit, le deuxième écoulement a un deuxième débit supérieur au premier selon un rapport compris entre 4 et 15.

On a constaté que lorsque le rapport des sections d'écoulements est dans la plage indiquée, il est possible de faire varier les débits dans une très large gamme, d'un facteur supérieur à 6 tout en conservant un rendement de coagulation très élevé, supérieur à 80 %.

De même on a constaté que ce procédé est applicable avec des rapports des débits d'écoulement très variés, en rapport avec la teneur en charge du masterbatch par exemple de 20 à 120 pce (parties pour cent parties d'élastomère, en masse) tout en conservant comme précédemment indiqué un rendement de coagulation très élevé. On rappelle que le rendement de coagulation correspond au rapport de la masse sèche récupérée sur la masse visée au départ, multiplié par cent.

Ce rapport des sections permet aussi un premier ajustement des concentrations respectives d'élastomère et de charge dans le mélange-maître à réaliser. Un ajustement plus fin est lié aux concentrations respectives d'élastomère et de charge dans les écoulements ainsi qu'aux débits respectifs des deux écoulements.

Selon un mode de réalisation préférentiel, le premier écoulement débouche au sein du deuxième écoulement.

Comme la section d'écoulement du premier écoulement est beaucoup plus petite que celle du deuxième, ce mode de réalisation est plus simple à réaliser.

Avantageusement, le mélange des deux écoulements débouche à l'air libre.

Avantageusement, le procédé selon l'un des objets de l'invention comprend en outre une étape d'agitation du mélange résultant de la mise en contact avec une vitesse de cisaillement minimale de l'ordre de 10 s⁻¹ pour initier une coagulation des matériaux dudit mélange et obtenir un mélange coagulé.

Cette étape d'agitation peut être réalisée par une table oscillante ou un tapis oscillant.

Elle peut aussi être réalisée par un agitateur rotatif.

Avantageusement, le mélange coagulé est ensuite déversé sur un convoyeur.

De préférence, en sortie du convoyeur le mélange coagulé est essoré par pressage pour obtenir un mélange essoré.

Cet essorage peut être réalisé au moyen d'un dispositif choisi dans le groupe constitué par les dispositifs suivants : extrudeuse à vis conique, piston, extrudeuse bi-vis avec systèmes d'évacuation d'eau.

Le mélange essoré est ensuite avantageusement séché en le portant à une température supérieure à la température de vaporisation de l'eau.

On obtient alors un mélange-maître d'élastomère et de particules de charges prêt à recevoir les additifs complémentaires tel le système de réticulation avant d'être mis en forme et d'être utilisé dans la fabrication notamment d'un bandage pneumatique ou tout autre objet caoutchouteux.

Selon un mode de réalisation préférentiel, la préparation du deuxième écoulement comporte une étape de fragmentation des agrégats de charge du deuxième écoulement.

Le procédé selon l'un des objets de l'invention permet d'utiliser des charges choisies dans le groupe constitué par les noirs de carbone, les silices, le kaolin, la craie, les charges organiques de synthèse, les charges organiques naturelles et leurs mélanges.

Ce procédé est donc d'utilisation très large. Dans le cas de charges telles les silices, le premier écoulement peut avantageusement comporter des agents facilitant la coagulation après la mise en contact des deux écoulements tels des sels métalliques ou des agents de couplage comme indiqué dans le document FR 2 981 076.

L'invention a aussi pour objet un dispositif de préparation en continu d'un mélange-maître caoutchouteux chargé, comportant une zone d'alimentation avec des moyens d'acheminement dans une première canalisation d'un premier écoulement d'une émulsion d'élastomère et des moyens d'acheminement dans une deuxième canalisation d'un deuxième écoulement d'une suspension aqueuse de particules de charges, une zone d'écoulements parallèles des premier et deuxième écoulements dans laquelle la canalisation de plus petite section est disposée à l'intérieur de la canalisation de plus grande section et une zone de mélangeage en aval de la zone d'écoulements parallèles constituée par la cavité interne de la canalisation de plus grande section en aval de l'extrémité de la canalisation de plus petite section.

Avantageusement, la canalisation de plus grande section est la deuxième canalisation.

Selon un mode de réalisation avantageux, les deux canalisations en amont de la zone de mélange sont coaxiales.

Très avantageusement, les deux canalisations ont chacune une section circulaire.

Préférentiellement, dans la zone d'écoulements parallèles, le premier écoulement ayant une première section d'écoulement, le deuxième écoulement a une deuxième section d'écoulement supérieure à la première selon un rapport compris entre 5 et 8.

Préférentiellement, D étant le diamètre intérieur de la canalisation de plus grand diamètre et L étant la longueur de la zone de mélangeage, le rapport L/D est variable et de préférence compris entre 0,5 et 3.

En dessous de 0,5, l'homogénéité du mélange maître obtenu peut être insuffisante et au-delà de 3, on observe que la coagulation du mélange maître devient importante dans la zone de mélangeage.

Très préférentiellement, H étant la longueur de la zone d'écoulements parallèles et D le diamètre de la canalisation de diamètre le plus élevé, le rapport H/D est supérieur à 1. Cela permet de retrouver des écoulements laminaires dans la zone d'écoulements parallèles.

### Description des Figures

Les différents objets de l'invention sont maintenant décrits avec l'aide du dessin annexé dans lequel :
- la figure 1 présente un schéma d'ensemble d'une installation de préparation de mélanges-maitres caoutchouteux ;
- la figure 2 présente une vue en coupe simplifiée d'un dispositif de mélangeage selon l'un des objets de l'invention ;
- les figures 3A et 3B présentent, vu en coupe, deux modes de réalisations du dispositif de la figure 2 ;
- la figure 4 présente une vue en perspective du dispositif de mélangeage de la figure 2 ; et
- les figures 5 et 6 présentent très schématiquement les types d'écoulements ainsi que l'évolution de la fraction massique des deux matériaux en contact dans le dispositif de mélangeage obtenus avec un logiciel de fluidique.

### Description détaillée de l'invention

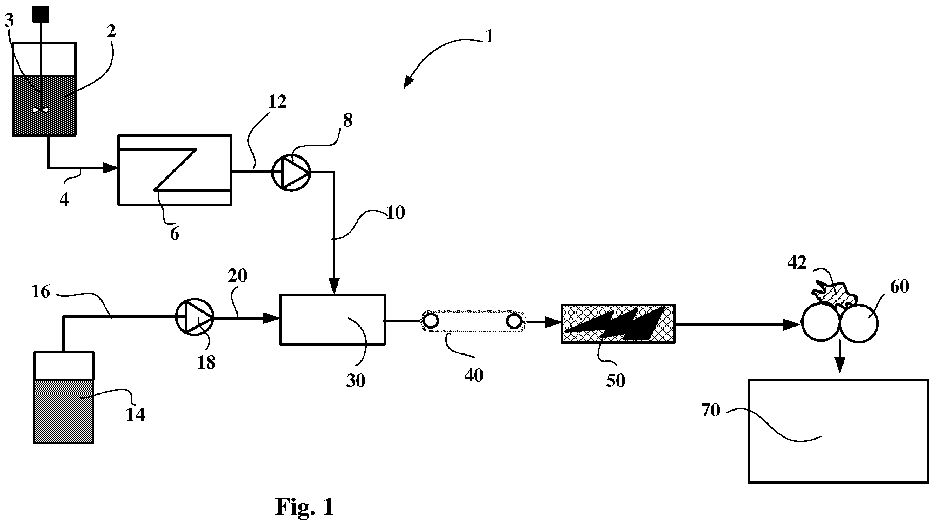

La figure 1 présente un mode de réalisation d'une installation 1 de préparation d'un mélange-maître caoutchouteux chargé.

L'installation comporte un premier réservoir 14 rempli d'une émulsion d'élastomère. La canalisation 16 relie le réservoir 14 à une pompe péristaltique 18 destinée à doser très précisément le volume d'émulsion élastomère introduit dans le mélangeur 30 via la canalisation 20.

L'installation 1 comporte aussi un deuxième réservoir 2 rempli de particules de charge pré-dispersées dans de l'eau. De préférence, la dispersion des particules de charges est maintenue à l'aide d'un agitateur rotatif 3. On peut aussi utiliser une sonde ultrasonique. Une canalisation 4 achemine la dispersion aqueuse de charges jusqu'à un Microfluidizer® 6 pour fragmenter les agrégats de charge restant dans la dispersion. La canalisation 12 relie la sortie du Microfluidizer® 6 à une pompe péristaltique 8 destinée à doser très précisément le volume de la dispersion aqueuse de charges introduit dans le mélangeur 30 via la canalisation 10.

En sortie du mélangeur 30 se trouve un convoyeur de préférence un tapis vibreur 40 destiné à initier ou accélérer la coagulation par agitation du mélange caoutchouteux chargé. Puis une extrudeuse à vis conique 50 permet d'essorer puis de sécher le mélange coagulé. On trouve ensuite une extrudeuse bi-vis 60 pour prolonger le séchage du mélange coagulé 42 et obtenir un mélange-maître 70 apte à recevoir les additifs complémentaires tels le système de réticulation sur un outil à cylindre par exemple (non représenté).

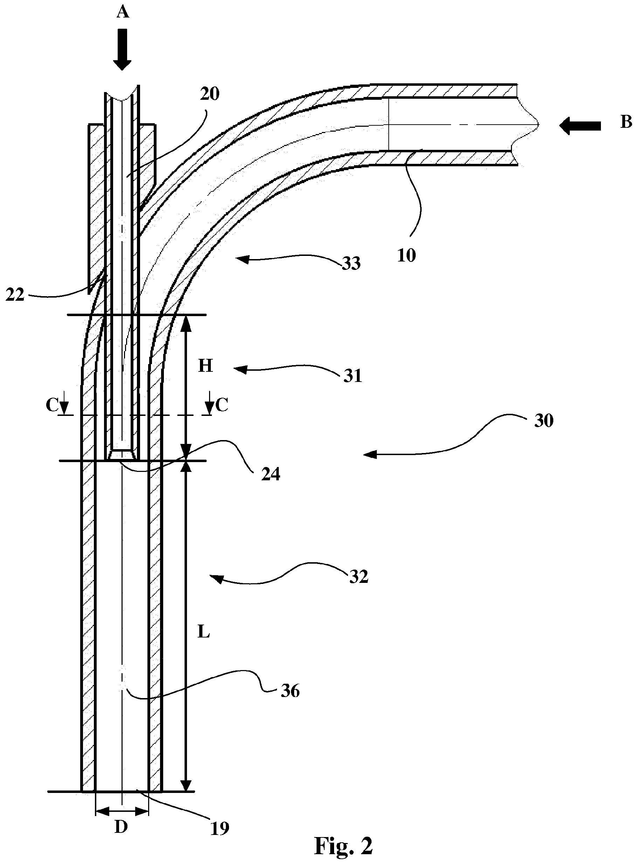

La figure 2 présente une vue en coupe du mélangeur 30 selon un objet de l'invention.

Le mélangeur 30 comprend une zone d'alimentation 33, une zone d'écoulements parallèles 31 et une zone de mélangeage 32.

La zone d'alimentation 33 comprend les deux canalisations 20 et 10 qui acheminent respectivement les écoulements d'émulsion élastomère et de suspension aqueuse de particules de charges ou slurry de charges ainsi que la zone 22 où la canalisation 20 pénètre dans la canalisation 10 de plus grand diamètre. La flèche A indique le sens de l'écoulement de l'émulsion d'élastomère dans la canalisation 20 et la flèche B le sens de l'écoulement du slurry de charges dans la canalisation 10.

La zone d'écoulements parallèles 31 est en aval de la zone 22. Les deux canalisations 10 et 20 sont coaxiales dans cette zone qui se termine à l'extrémité 24 de la canalisation 20.

La zone de mélangeage 32 est en aval de la zone d'écoulements parallèles 31. Cette zone débute à l'extrémité 24 de la canalisation 20 et se termine à l'extrémité 19 de la canalisation 10. Cette zone est donc constituée par la paroi interne de la canalisation de plus grande section 10 en amont de la zone d'écoulements parallèles 31. La zone de mélangeage 32 débouche en 19 à l'air libre.

Dans cet exemple de réalisation, la canalisation de plus grande section est la canalisation 10 qui achemine la suspension aqueuse de particules de charges et les deux canalisations ont toutes les deux une section circulaire.

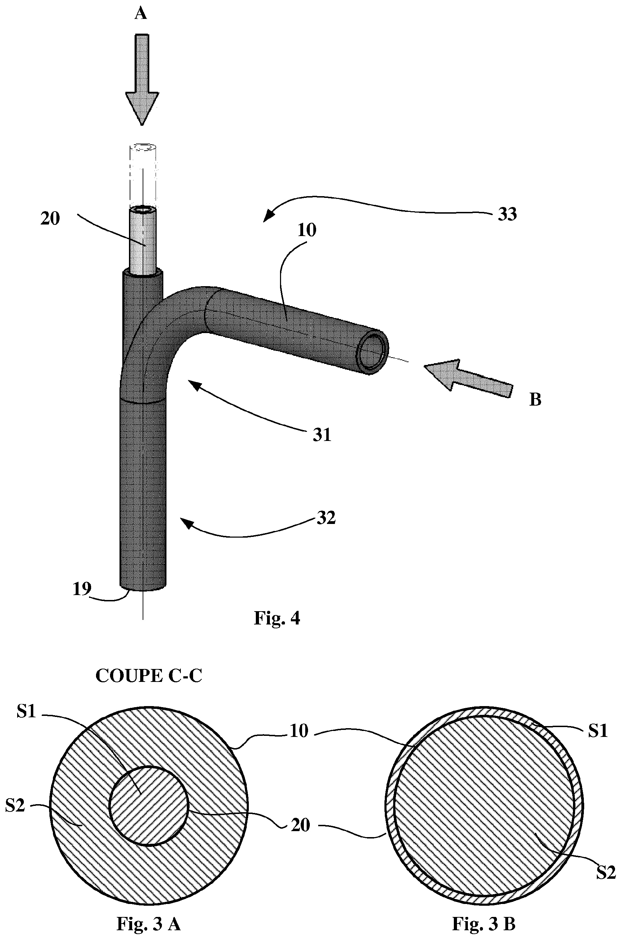

La figure 4 présente une vue en perspective d'un mélangeur 30 avec la zone d'alimentation 33 comprenant les canalisations 10 et 20, la zone d'écoulements parallèles 31 et la zone de mélangeage 32 avec son extrémité 19. Cette figure illustre que l'on peut aisément régler la longueur de la zone de mélangeage en faisant plus ou moins coulisser la canalisation 20 dans l'ouverture de la canalisation 10 à partir d'une première position illustrée en traits interrompus.

Comme à la figure 2, les deux flèches A et B indiquent les sens des deux écoulements.

Les deux écoulements sont véhiculés grâce à des pompes de type péristaltique. Ces pompes permettent de maitriser leurs débits respectifs avec une grande précision et ont l'avantage d'éviter toute contamination des écoulements.

Les figures 2 et 4 montrent l'introduction de la canalisation 20 dans la canalisation 10, c'est-à-dire que l'on introduit l'émulsion d'élastomère de 20 dans le slurry de charges de 10. C'est le mode de réalisation préféré.

La figure 3A est une coupe C-C de la zone d'écoulements parallèles 31 du dispositif 30 telle qu'indiqué à la figure 2. La canalisation 10 est la canalisation de plus grand diamètre et conduit l'écoulement du slurry de charges. La canalisation 20 est la canalisation de plus petit diamètre qui conduit l'écoulement de l'émulsion d'élastomères. La canalisation 20 de section de flux d'écoulement SI est disposée au centre de la canalisation 10. Le flux d'écoulement du slurry de charges à une section d'écoulement S2. Dans l'exemple présenté, le diamètre de la canalisation 10 est de 10 mm et celui de la canalisation 20 de 4 mm. Le rapport S2/S1 est ici égal à 5,2.

Il est aussi possible d'inverser les deux canalisations tout en respectant les ratios voulus de 5 à 8 des sections des écoulements dans la zone d'écoulements parallèles 31. Un exemple est présenté à la figure 3B. Dans ce cas, c'est la canalisation 10 qui pénètre dans la canalisation 20 pour former la zone d'écoulements parallèles et la zone de mélangeage. Dans l'exemple présenté, le diamètre de la canalisation 20 est de 10 mm, celui de la canalisation 10 est de 9,2 mm, le rapport des sections des flux d'écoulements est proche de celui de la figure 3A et est égal à 5,5. On voit que les diamètres des deux canalisations sont très proches ce qui peut être moins aisé à réaliser de façon robuste, notamment lorsque le rapport des sections des flux d'écoulements augmente.

L'introduction dans la zone 22 de la canalisation 20 dans la canalisation 10 de façon à ce que les deux canalisations soient coaxiales permet d'obtenir une zone dans laquelle les deux écoulements sont parallèles. Après une zone de perturbation liée à l'introduction de la canalisation 20, les deux écoulements sont de préférence laminaires.

À l'extrémité 24 de la canalisation 20, les deux écoulements sont mis en contact et le mélangeage commence.

Le tableau 1 présente les conditions opératoires d'un exemple de réalisation d'un mélange maître selon l'un des objets de l'invention.

**Tableau 1**

| | Slurry de noir de carbone | Émulsion de latex |
|---|---|---|
| Teneur en charges du slurry ou extrait sec du latex | 4% | 60% |
| Viscosité des écoulements (cP) | 17 | 55 |
| Densité des écoulements | 1 | 1 |
| Pression d'acheminement en amont de la zone de mélangeage (bar) | 1 | 1 |
| Débits (ml/mn) | 530 | 80 |
| Débit total (ml/mn) | 610 | |
| Température des écoulements (°Celsius) | 30 | |
| Diamètre interne des canalisations (mm) | 10 | 5 |
| Matériau des canalisations | Acier inox 304L | |

La canalisation du slurry de charges a un diamètre intérieur de 10 mm et celui de l'émulsion de latex est de 5 mm. Le rapport S2/S1 est ainsi de 3.

L'écoulement du slurry de charges est composé de 4 % en masse de noir de carbone et de 96 % d'eau.

L'écoulement de l'émulsion de latex est composé de 60 % en masse de latex et de 40 % d'eau.

La pression d'acheminement des deux écoulements a été mesurée dans la zone d'écoulements parallèles à proximité immédiate de la zone de mélangeage. Ces deux pressions sont de 1 bar. Ces pressions d'acheminement sont des pressions relatives vis-à-vis de la pression atmosphérique. Elles sont donc de 2 bars en valeur absolue.

On a constaté une nette différence de viscosité des deux écoulements et le rapport des débits est de 6,6.

Il est à noter que l'échauffement lié au mélangeage est très limité en raison du caractère très peu énergétique de celui-ci : la température des écoulements est de 30 degrés Celsius.

La figure 4 présente très schématiquement les modes d'écoulement des deux écoulements à la fin de la zone d'écoulement parallèles 31 et dans la zone de mélangeage 32.

On distingue quatre zones principales :
- une zone I d'écoulements laminaires des deux écoulements d'émulsion d'élastomère et de slurry de charges dans la zone d'écoulement parallèles 31 ;
- une zone II d'écoulement fortement turbulents dans la partie centrale de la première partie de la zone de mélangeage 32 adjacente à la zone d'écoulements parallèles 31 ;
- une zone III d'écoulement turbulent dans les parties latérales de la première partie de la zone de mélangeage 32 ; et
- une zone IV d'écoulement laminaire dans la partie de la zone de mélangeage 32 du côté de l'extrémité 19 de la canalisation 10.

On règle la longueur de la zone de mélangeage de telle sorte qu'à l'extrémité 19 de la canalisation 10 le mélange des deux écoulements ne soit pas coagulé mais toujours liquide.

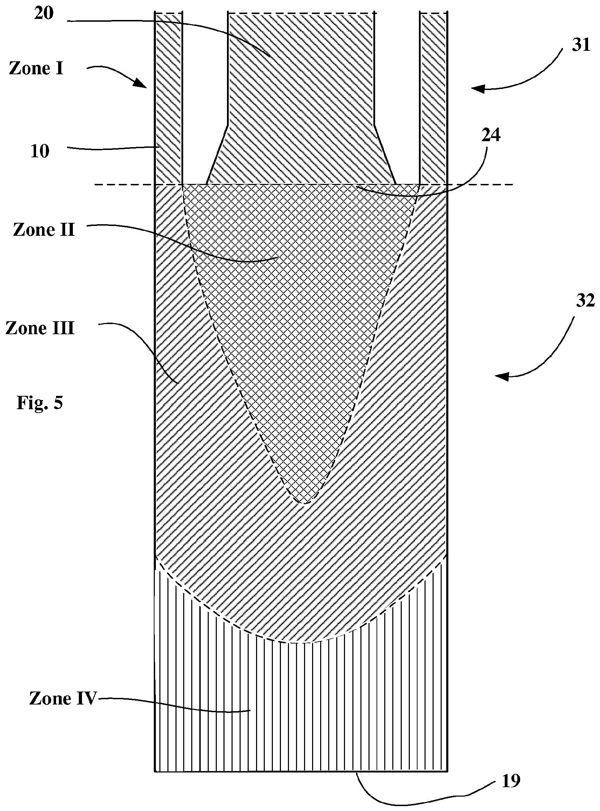

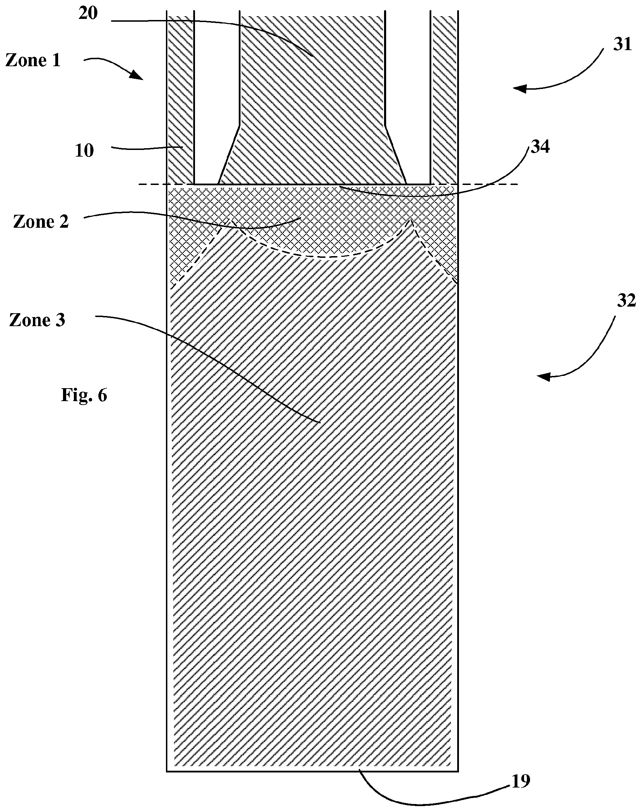

La figure 6 présente l'évolution de la fraction massique des deux écoulements obtenue avec le même logiciel fluidique que la figure 5.

On distingue trois zones principales :
- zone 1 : avant la zone de mise en contact, les deux écoulements sont « purs » et homogènes ;
- zone 2 : zone de variation très rapide de la fraction massique des deux écoulements, on constate que cette zone 2 est relativement réduite ;
- zone 3 : la fraction massique est pratiquement homogène dans toute cette troisième zone et la dispersion des particules de charge dans la matrice de latex est excellente.

Il est à noter que la coagulation du mélange obtenu ne démarre pas ou pratiquement pas dans la zone de mélangeage mais uniquement dans le convoyeur vibrant 40 qui le reçoit. On constate que dès que ce liquide est déposé sur ce convoyeur vibreur 40 la coagulation est immédiate et en masse.

Pour illustrer le fonctionnement du mélangeur 30, des essais ont été réalisés en faisant varier le rapport des sections d'écoulements de 4 à 12,3, en conservant le rapport des débits entre les deux écoulements à 6,9 pour obtenir un taux de charge de 45 pce du masterbatch obtenu pour deux types de noirs de carbone N134 et CRX 1346, le taux de charge du slurry étant de 4% et l'émulsion de latex de caoutchouc naturel ayant un extrait sec de 60%.

Les résultats obtenus montrent une stabilité du rendement de coagulation à une valeur élevée supérieure à 80 %.

Des essais similaires ont été réalisés avec comme charge de la silice 160MP, avec un rapport des débits entre les deux écoulements à 4,1 pour obtenir un taux de charge de 50 pce du masterbatch obtenu, le taux de charge du slurry étant de 7,4 % et l'émulsion de latex de caoutchouc naturel ayant un extrait sec de 60 % ; les débits totaux ont aussi varié d'un facteur 6.

Les résultats obtenus montrent aussi une stabilité du rendement de coagulation à une valeur élevée proche de 90 % dans ce cas d'utilisation de silice comme charge.

En conservant un même rapport des sections d'écoulement ainsi que les mêmes compositions de slurrys de charge et de latex de caoutchouc naturel, on a fait varier les rapports des débits d'écoulement pour définir les teneurs minimales et maximales en charge des masterbatchs qu'il est possible de réaliser.

Dans le cas du noir N134, on a obtenu d'excellentes valeurs du rendement de coagulation entre 20 et 120 pce du masterbatch, supérieures à 80 %.

Dans le cas du noir CRX 1346, la plage du taux de charge du masterbatch obtenue a été entre 25 et 120 pce.

Enfin, dans le cas de la silice MP160, on a constaté une plage de 10 à 100 pce.

On a aussi constaté qu'au-delà d'un rapport des sections des écoulements de 8, les valeurs hautes de ces plages diminuent très fortement.

Le mélangeur 30 a donc plusieurs avantages très importants, un faible besoin énergétique en raison de l'écoulement des flux à des pressions très faibles, inférieures à 2 bars et même proche de la pression atmosphérique et des micro-turbulences très efficaces dans la zone de rencontre des deux flux.

Ce mélangeur présente aussi l'avantage de pouvoir réaliser des mélanges avec des charges de natures très variées : noir de carbone, silice, kaolin, charges organiques de synthèse, charges organiques naturelles telles des fibres de bois, de cellulose.

Les concentrations du slurry de charge peuvent atteindre 20% en masse selon le type de charge.

Les émulsions d'élastomères peuvent aussi être des latex de caoutchouc naturel à des concentrations différentes, par exemple 30, 60% en masse, des émulsions de type SBR, BR, ERA à des concentrations pouvant aussi atteindre 30, 60% en masse.

Les taux de charges résultants peuvent être très larges. On peut réaliser un mélange maître avec des taux de 15 à 120 pce de noir de carbone et pour la silice, des taux de 10 à 100 pce.

Un autre avantage de ce dispositif de mélangeage est sa grande facilité de réglage en faisant varier la profondeur de pénétration de la canalisation interne dans l'autre, on modifie la longueur de la zone de mélangeage ce qui permet de l'adapter finement en fonction des mélanges maîtres à réaliser.

## Revendications

1. Procédé de préparation en continu d'un mélange-maître caoutchouteux chargé, ledit procédé consistant à mettre en contact dans une zone de mélangeage un premier écoulement en phase liquide et un deuxième écoulement en phase liquide, le premier écoulement étant une émulsion d'élastomère, le deuxième écoulement étant une suspension aqueuse de particules de charge, **caractérisé en ce que** l'un des deux écoulements débouche au sein de l'autre écoulement et **en ce que,** en amont de la zone de mélangeage, les premier et deuxième écoulements sont acheminés sous une pression inférieure à 2 bars et de préférence inférieure à 1,5 bars avant leur mise en contact.

2. Procédé selon la revendication 1, dans lequel en amont de la zone de mélangeage, le premier écoulement ayant une première section d'écoulement, le deuxième écoulement a une deuxième section d'écoulement supérieure à la première selon un rapport compris entre 5 et 8.

3. Procédé selon l'une des revendications 1 et 2, dans lequel en amont de la zone de mélangeage, le premier écoulement ayant un premier débit, le deuxième écoulement a un deuxième débit supérieur au premier selon un rapport compris entre 4 et 15.

4. Procédé selon l'une des revendications 1 à 3, dans lequel le premier écoulement débouche au sein du deuxième écoulement.

5. Procédé selon l'une des revendications précédentes, dans lequel le mélange des deux écoulements débouche à l'air libre.

6. Procédé selon l'une quelconque des revendications précédentes, comprenant en outre une étape d'agitation du mélange résultant de la mise en contact avec une vitesse de cisaillement minimale de l'ordre de 10 s⁻¹ pour initier une coagulation des matériaux dudit mélange et obtenir un mélange coagulé.

7. Procédé selon l'une quelconque des revendications précédentes, comprenant en outre une étape ultérieure consistant à essorer le mélange coagulé par pressage pour obtenir un mélange essoré.

8. Procédé selon la revendication 7, comprenant en outre une étape ultérieure consistant à sécher le mélange essoré en le portant à une température supérieure à la température de vaporisation de l'eau.

9. Procédé selon l'une quelconque des revendications précédentes, dans lequel la préparation du deuxième écoulement comporte une étape de fragmentation des agrégats de charge dudit deuxième écoulement.

10. Procédé selon l'une quelconque des revendications précédentes, dans lequel les charges sont choisies dans le groupe constitué par les noirs de carbone, les silices, le kaolin, la craie, les charges organiques de synthèse, les charges organiques naturelles et leurs mélanges.

11. Dispositif de préparation en continu d'un mélange-maître de mélange caoutchouteux chargé, comportant :
- une zone d'alimentation avec des moyens d'acheminement dans une première canalisation d'un premier écoulement d'une émulsion d'élastomère et des moyens d'acheminement dans une deuxième canalisation d'un deuxième écoulement d'une suspension aqueuse de particules de charges ;
- une zone d'écoulements parallèles des premier et deuxième écoulements dans laquelle la canalisation de plus petite section est disposée à l'intérieur de la canalisation de plus grande section ; et
- une zone de mélangeage en aval de la zone d'écoulements parallèles constituée par la cavité interne de la canalisation de plus grande section en aval de l'extrémité de la canalisation de plus petite section,
dans lequel en amont de la zone de mélangeage, dans la zone d'écoulements parallèles, le premier écoulement ayant une première section d'écoulement, le deuxième écoulement a une deuxième section d'écoulement supérieure à la première section d'écoulement selon un rapport compris entre 5 et 8.

12. Dispositif selon la revendication 11, dans lequel la zone de mélangeage débouche à l'air libre.

13. Dispositif selon l'une des revendications 11 et 12, dans lequel la canalisation de plus grande section est la deuxième canalisation.

14. Dispositif selon l'une quelconque des revendications 11 à 13, dans lequel les deux canalisations ont chacune une section circulaire et dans lequel, D étant le diamètre intérieur de la canalisation de plus grand diamètre et L étant la longueur de la zone de mélangeage, le rapport L/D est variable et de préférence compris entre 0,5 et 3.

## Patentansprüche

1. Verfahren zur fortlaufenden Herstellung eines füllstoffhaltigen Kautschuk-Masterbatchs, wobei das Verfahren darin besteht, in einem Mischbereich eine erste Strömung in flüssiger Phase und eine zweite Strömung in flüssiger Phase zusammenzuführen, wobei die erste Strömung eine Elastomeremulsion ist, die zweite Strömung eine wässrige Suspension von Füllpartikeln ist, **dadurch gekennzeichnet, dass** eine der zwei Strömungen innerhalb der anderen Strömung mündet, und dass stromaufwärts vor dem Mischbereich die erste und die zweite Strömung unter einem Druck von weniger als 2 Bar und vorzugsweise von weniger als 1,5 Bar befördert werden, ehe sie zusammengeführt werden.

2. Verfahren nach Anspruch 1, wobei stromaufwärts vor dem Mischbereich, wobei die erste Strömung einen ersten Strömungsquerschnitt hat, die zweite Strömung einen zweiten Strömungsquerschnitt größer als der erste gemäß einem Verhältnis zwischen 5 und 8 hat.

3. Verfahren nach einem der Ansprüche 1 und 2, wobei stromaufwärts vor dem Mischbereich, wobei die erste Strömung einen ersten Durchsatz hat, die zweite Strömung einen zweiten Durchsatz größer als der erste gemäß einem Verhältnis zwischen 4 und 15 hat.

4. Verfahren nach einem der Ansprüche 1 bis 3, wobei die erste Strömung innerhalb der zweiten Strömung mündet.

5. Verfahren nach einem der vorhergehenden Ansprüche, wobei die Mischung der zwei Strömungen im Freien mündet.

6. Verfahren nach einem der vorhergehenden Ansprüche, das außerdem einen Schritt des Rührens der aus der Zusammenführung resultierenden Mischung mit einer minimalen Schergeschwindigkeit in der Größenordnung von 10 s⁻¹ enthält, um eine Koagulation der Materialien der Mischung zu starten und eine koagulierte Mischung zu erhalten.

7. Verfahren nach einem der vorhergehenden Ansprüche, das außerdem einen späteren Schritt enthält, der darin besteht, die koagulierte Mischung durch Pressen zu entwässern, um eine entwässerte Mischung zu erhalten.

8. Verfahren nach Anspruch 7, das außerdem einen späteren Schritt enthält, der darin besteht, die entwässerte Mischung zu trocknen, indem sie auf eine Temperatur höher als die Verdampfungstemperatur des Wassers gebracht wird.

9. Verfahren nach einem der vorhergehenden Ansprüche, wobei die Herstellung der zweiten Strömung einen Schritt der Fragmentierung der Füllaggregate der zweiten Strömung enthält.

10. Verfahren nach einem der vorhergehenden Ansprüche, wobei die Füllstoffe aus der Gruppe gewählt werden, die aus den Rußen, den Siliciumdioxiden, Kaolin, Kreide, den synthetischen organischen Füllstoffen, den natürlichen organischen Füllstoffen und ihren Mischungen bestehen.

11. Vorrichtung zur fortlaufenden Herstellung eines Masterbatchs einer füllstoffhaltigen Kautschukmischung, die aufweist:
- einen Versorgungsbereich mit Beförderungseinrichtungen in einer ersten Rohrleitung einer ersten Strömung einer Elastomeremulsion und Beförderungseinrichtungen in einer zweiten Rohrleitung einer zweiten Strömung einer wässrigen Suspension von Füllpartikeln;
- einen Bereich von parallelen Strömungen der ersten und zweiten Strömung, in dem die Rohrleitung kleineren Querschnitts im Inneren der Rohrleitung größeren Querschnitts angeordnet ist; und
- einen Mischbereich stromabwärts hinter dem Bereich von parallelen Strömungen, der aus dem inneren Hohlraum der Rohrleitung größeren Querschnitts stromabwärts hinter dem Ende der Rohrleitung kleineren Querschnitts besteht,
wobei stromaufwärts vor dem Mischbereich im Bereich paralleler Strömungen, wobei die erste Strömung einen ersten Strömungsquerschnitt hat, die zweite Strömung einen zweiten Strömungsquerschnitt größer als der erste Strömungsquerschnitt gemäß einem Verhältnis zwischen 5 und 8 hat.

12. Vorrichtung nach Anspruch 11, wobei der Mischbereich im Freien mündet.

13. Vorrichtung nach einem der Ansprüche 11 und 12, wobei die Rohrleitung mit dem größeren Querschnitt die zweite Rohrleitung ist.

14. Vorrichtung nach einem der Ansprüche 11 bis 13, wobei die zwei Rohrleitungen je einen kreisförmigen Querschnitt haben und wobei, wenn D der Innendurchmesser der Rohrleitung größeren Durchmessers und L die Länge des Mischbereichs ist, das Verhältnis L/D variabel ist und vorzugsweise zwischen 0,5 und 3 liegt.

## Claims

1. Process for continuously preparing a filled rubber masterbatch, said process consisting in bringing into contact, in a mixing zone, a first liquid-phase flow and a second liquid-phase flow, the first flow being an elastomer emulsion, the second flow being an aqueous suspension of filler particles, **characterized in that** one of the two flows emerges inside the other flow and **in that, upstream of the mixing zone,** the first and second flows are transported under a pressure of less than 2 bar and preferably less than 1.5 bar before they are brought into contact.

2. Process according to claim 0, in which, upstream of the mixing zone, the first flow having a first flow area, the second flow has a second flow area greater than the first in a ratio of between 5 and 8.

3. Process according to either of claims 0 and 2, in which, upstream of the mixing zone, the first flow having a first flow rate, the second flow has a second flow rate greater than the first in a ratio of between 4 and 15.

4. Process according to one of claims 1 to 3, in which the first flow emerges inside the second flow.

5. Process according to one of the preceding claims, in which the mixture of the two flows emerges into the open air.

6. Process according to any one of the preceding claims, additionally comprising a step of agitating the mixture resulting from the contacting step with a minimum shear rate of the order of 10 s⁻¹ in order to initiate a coagulation of the materials of said mixture and obtain a coagulated mixture.

7. Process according to any one of the preceding claims, additionally comprising a subsequent step that consists in draining the coagulated mixture by pressing in order to obtain a drained mixture.

8. Process according to claim 7, additionally comprising a subsequent step that consists in drying the drained mixture by bringing it to a temperature above the evaporating temperature of the water.

9. Process according to any one of the preceding claims, in which the preparation of the second flow comprises a step of breaking up the filler aggregates of said second flow.

10. Process according to any one of the preceding claims, in which the fillers are selected from the group consisting of carbon blacks, silicas, kaolin, chalk, synthetic organic fillers, natural organic fillers and mixtures thereof.

11. Device for continuously preparing a filled rubber compound masterbatch, comprising:
- a feed zone with means for transporting, in a first pipe, a first flow of an elastomer emulsion and means for transporting, in a second pipe, a second flow of an aqueous suspension of filler particles;
- a parallel-flow zone of the first and second flows in which the pipe of smaller cross section is positioned inside the pipe of larger cross section; and
- a mixing zone downstream of the parallel-flow zone formed by the internal cavity of the pipe of larger cross section downstream of the end of the pipe of smaller cross section,
in which upstream of the mixing zone, in the parallel-flow zone, the first flow having a first flow area, the second flow has a second flow area greater than the first flow area in a ratio of between 5 and 8.

12. Device according to claim 11, in which the mixing zone emerges into the open air.

13. Device according to either of claims 11 and 12, in which the pipe of larger cross section is the second pipe.

14. Device according to any one of claims 11 to 13, in which, D being the internal diameter of the pipe of larger diameter and L being the length of the mixing zone, the ratio L/D is variable and is preferably between 0.5 and 3.
